# EUROPEAN PATENT APPLICATION

(11) **EP 1 816 540 A1**
(43) Date of publication of application: **08.08.2007**
(21) Application number: 06250580.5
(22) Date of filing: 03.02.2006
(51) Int. Cl.: G06F 1/16

(54) **Configurable handheld electronic device**

(71) Applicant: Research In Motion Limited, Waterloo, Ontario N2L 3W8 (CA)
(72) Inventor: Fyke, Steven, H., Waterloo, Ontario N2J 4T3 (CA); Griffin, Jason T., Kitchener, Ontario N2P 2L3 (CA); Ladouceur, Norman M., Waterloo, Ontario N2T 1A2 (CA)
(74) Representative: Fennell, Gareth Charles

(57) **Abstract**

An improved handheld electronic device (4) can be configured in a variety of different ways by a user. The user can select, for instance, a keypad module (52) from among a plurality of similar but different keypad modules, and/or can select a display module (48) from among a plurality of similar but different display modules, with the selected keypad module (52) and display module (48) being mounted to a frame (40) to form the handheld electronic device (4) having a particular form factor and an overall configuration.

## Description

### BACKGROUND

### 1. Field

The disclosed disclaimed and claimed concept relates generally to handheld electronic devices and, more particularly, to a handheld electronic device that is configurable by selecting the different components out of which to assemble or otherwise configure the handheld electronic device.

### 2. Description of the Related Art

Numerous types of handheld electronic devise are known. Examples of such handheld electronic devices include, for instance, personal data assistants (PDAs), handheld computers, two-way pagers, cellular telephones, and the like. Many handheld electronic devices also feature a wireless communication capability, although many such handheld electronic devices are stand-alone devices that are functional without communication with other devices. Handheld electronic devices are generally intended to be portable and thus are of a relatively compact configuration. With advances in technology, handheld electronic devices are built to have progressively smaller form factors yet have progressively great numbers of applications and features resident thereon.

A handheld electronic device typically includes components such as a processor apparatus, a keypad, and a display, among other components. The various components employed in a given handheld electronic device could be said to contribute to or to provide the "configuration" of the handheld electronic device. A vast number of handheld electronic devices of different configurations are available to consumers. For instance, one handheld electronic device may be configured to function primarily as a cellular telephone, with the device thus being configured to have a relatively small form factor. That is, the device might include a relatively small display, a keypad having a relatively small number of keys, such as those making up a touch-tone telephone keypad, and the device could have a processor that is of modest processing power. Another handheld electronic device might be intended to have text entry and e-mail communication as its primary function, with the device thus being configured for convenience of use. Such a device thus might include a complex keypad and a large, low resolution display intended to provide textual output. Still another device might be directed toward web browsing, and thus might be configured with a relatively simple keypad but with a large, high resolution display and significant processing power to handle the complex graphics that are included in many web pages. While such electronic handheld devices have been generally effective for their intended uses, such handheld electronic devices have not, however, been without limitation.

Users of handheld electronic devices typically have a wide variety of needs, and the needs of one user typically are different than those of another user. Additionally, users typically have a variety of needs that must be met. A given user thus might purchase and use a given handheld electronic device on the basis that the device provides the best set of features that meet a compromised set of needs of the user, with the various needs oftentimes being in conflict with one another. The result is that a particular handheld electronic device often will not meet all of a user's need, but will do a respectable job of largely meeting many of the user's needs. Such a user might need to purchase an additional electronic handheld device for use in particular circumstances, such as to better meet a particularly important need. Alternatively or additionally, the user might need to upgrade and/or replace handheld electronic devices on a relatively frequent basis as the user's needs mature and change over time.

It thus would be desirable to provide an improved handheld electronic device that is able to meet a relatively wider variety of needs than can be met by known devices.

### BRIEF DESCRIPTION OF THE DRAWINGS

A full understanding of the disclosed and claimed concept can be gained from the following Detailed Description when read in conjunction with the accompanying drawings in which:

Fig. 1 is a front elevational view of an improved handheld electronic device in accordance with the disclosed and claimed concept;

Fig. 1A is a schematic view of the handheld electronic device of Fig. 1;

Fig. 2 is an exploded front elevational view of the handheld electronic device of Fig. 1;

Fig. 3 is an exploded side elevational view of the handheld electronic device of Fig. 1;

Fig 4. is an exploded front elevational view of an improved handheld electronic device in accordance with a second embodiment of the disclosed and claimed concept;

Fig. 5 is a front elevational view of the handheld electronic device of Fig. 4 in an assembled condition;

Fig. 6 is a perspective view of an improved handheld electronic device in accordance with a third embodiment of the disclosed and claimed concept;

Fig. 7 is another perspective view of a portion of the handheld electronic device of Fig. 6; and

Fig. 8 is a perspective view of a component that can be used to replace a similar but different component in the handheld electronic device of Fig. 6.

Similar numerals refer to similar parts throughout the specification.

### DETAILED DESCRIPTION

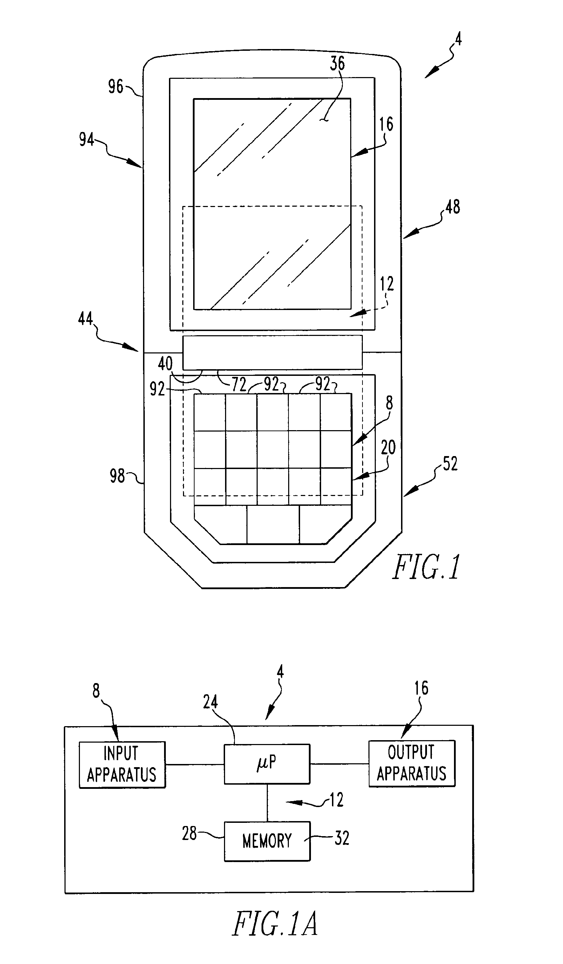

An improved handheld electronic device 4 in accordance with the disclosed and claimed concept is depicted generally in Fig. 1 and is depicted schematically in Fig. 1A. The handheld electronic device 4 can be generally stated as including an input apparatus 8, a processor apparatus 12, and an output apparatus 16. The input apparatus 8 can be said to include a keypad 20 that provides input to the processor apparatus 12. As can be understood from Fig. 1A, the processor apparatus 12 can be said to include a processor 24 and a memory 28. The output apparatus 16 can be said to include a display 26.

The processor 24 can be, for instance and without limitation, a microprocessor (µP), and it is responsive to input from the input apparatus 8 and provides output signals to the output apparatus 16. The processor 24 interfaces with the memory 28. The memory can be any one or more of RAM, ROM, EPROM(s), EEPROM(s), and the like that provide a storage register for data storage such as in the fashion of an internal storage area of a computer, and can be volatile or nonvolatile memory. The memory 28 additionally includes a number of routines 32 stored therein that are executable on the processor 24 and that can be in any of a variety of forms such as, without limitation, software, firmware, and the like. As employed herein, the expression "a number of" and variations thereof shall refer broadly to any nonzero quantity, including the quantity of one.

The handheld electronic device 4 advantageously can be configured by the user to have any of a variety of configurations that might be desired by the user. The various components that are incorporated into the handheld electronic device 4 can be selected by the user from among a plurality of similar but different components.

By way of example, and as can be seen in Figs. 1, 2, and 3, the handheld electronic device 4 can be generally said to include a frame 40 and an interface apparatus 44. When the handheld electronic device 4 is in an assembled condition, as is indicated generally in Fig. 1, the interface apparatus 44 is disposed on the frame 40.

The exemplary interface apparatus 44 includes a display module 48 and a keypad module 52. The display model 48 and the keypad module 52 each serve as an interface module of the interface apparatus 44. In the depicted exemplary embodiment, the display module 48 and the keypad module 52 are each independently mountable to the frame 40. As will be described in greater detail, the display module 48 and the keypad module 52 are among the various components that can be selected by the user in ultimately configuring the handheld electronic device 4.

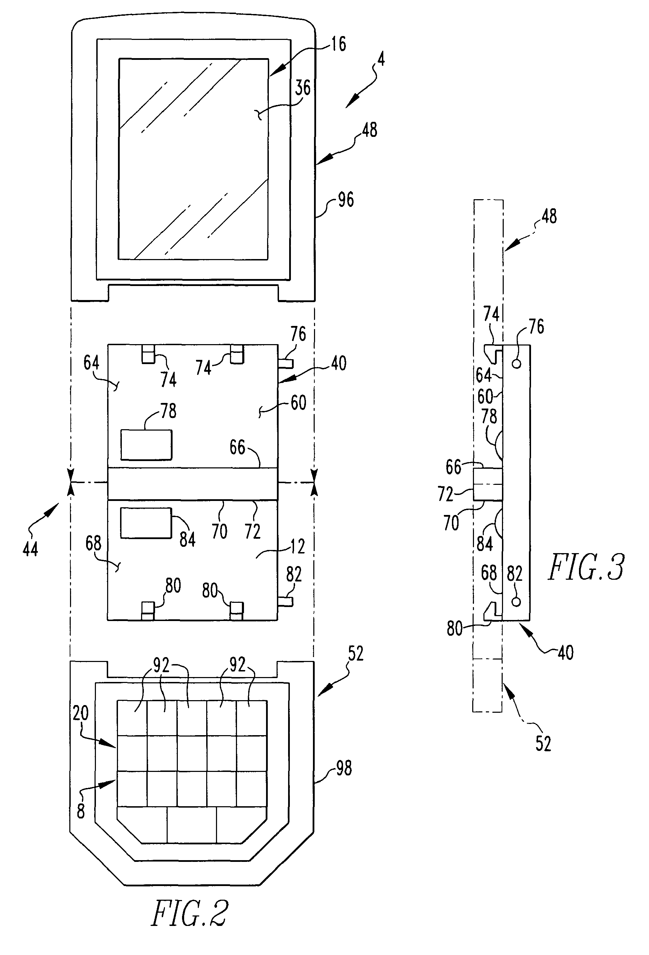

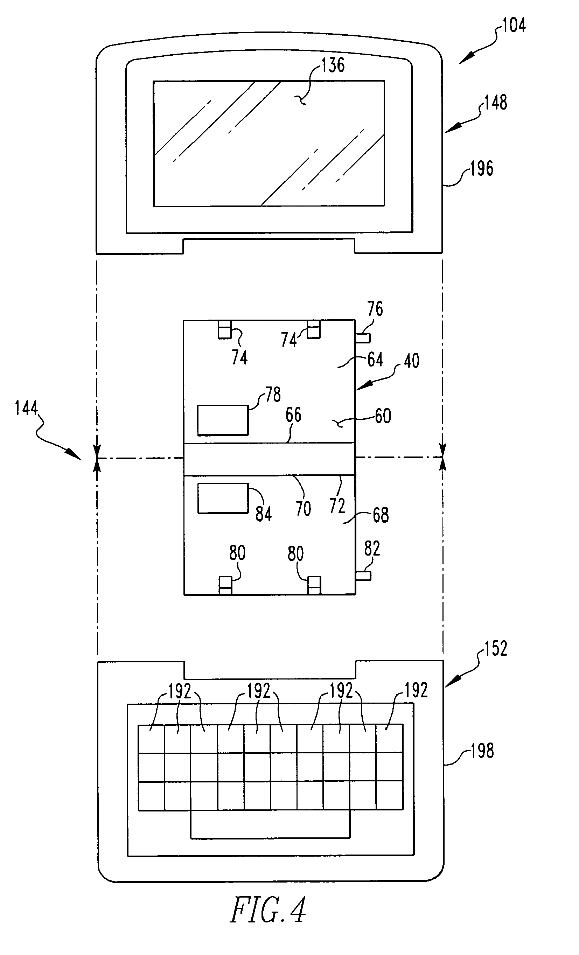

As can be understood from Figs. 2 and 3, the frame 40 includes a front surface 60. The frame 40 additionally includes a display receptacle 64 for receiving the display module 48 and a keypad receptacle 68 for receiving the keypad module 52. The display receptacle 64 and the keypad receptacle 68 are each, in the depicted exemplary embodiment, disposed at least partially at the front surface 60 of the frame 40.

The frame 40 additionally includes a brace 72 that protrudes outwardly away from the front surface 60. In the depicted exemplary embodiment, the display module 48 and the keypad module 52 are each mounted to and adjacent to the brace 72.

Specifically, the display receptacle 64 includes a set of display latches 74, a display release 76, and a display connector 78. Similarly, the keypad receptacle 68 includes a set of keypad latches 80, keypad release 82, and a keypad connector 84. The display module 48 is mounted to the display receptacle 64 by receiving the display module 48 against an engagement surface 66 of the brace 72 and by cooperating the display latches 74 with corresponding structures (not expressly depicted) on the display module 48. The display module 48 additionally includes electrical contacts (not expressly depicted) that are electrically connected with corresponding contacts of the display connector 78 when the display module 48 is mounted to the display receptacle 64. Such contacts electronically connect together the display module 48 and the processor apparatus 12. The display module 48 can be released from the display receptacle 64 by actuating the display release 76 which deactivates the display latches 74 and allows the display module 48 to be removed from the display receptacle 64.

The keypad module 52 is similarly mounted to and releasable from the keypad receptacle 68. Specifically, the keypad module 52 is mounted to the keypad receptacle 68 by receiving the keypad module 62 against another engagement surface 70 of the brace 72 and by cooperating the keypad latches 80 with corresponding structures (not expressly depicted) of the keypad module 52. The keypad module 52 includes electrical contacts (not expressly depicted herein) that are cooperable with electrical contacts of the keypad connector 84. Such contacts enable the keypad module 52 and the processor apparatus 12 to be electrically connected together. The keypad module 52 can be released from the keypad receptacle 68 by actuating the keypad release 82 which deactivates the keypad latches 80, enabling the keypad module 52 to be removed from the keypad receptacle 68.

The processor apparatus 12 is, in the depicted exemplary embodiment, disposed on the frame 40. The processor apparatus 12 can be configured to enable the processor 24 to be removed and replaced with another processor, and can additionally or alternatively be configured to enable the memory 28 to be expandable. Other variations will be apparent. The handheld electronic device 4 includes a power source which, in the present exemplary embodiment, is a battery (not expressly depicted herein) disposed on the frame 40.

The exemplary keypad module 52 includes a plurality of keys 92 which are arranged in a plurality of rows and columns. Several of the rows of keys 92 each include five of the keys 92. For instance, each key 92 might have a plurality of characters or other linguistic elements assigned thereto. One of the routines 32 resident on the handheld electronic device 4 thus might be a disambiguation routine that can be employable for text input.

The handheld electronic device 4 can thus be said to include a housing 94 that is comprised of at least some of the various components that are assembled to form the handheld electronic device 4. For instance, the display module 48 includes a first housing portion 96, and the keypad module 52 includes a second housing portion 98. The first and second housing portions 96 and 98, in combination with the frame 40, for instance, together form the housing 94. The frame 40, plus the particular display module 48 and the particular keypad module 52 mounted to the frame 40 together dictate the form factor of the handheld electronic device 4. For instance, the exemplary handheld electronic device 4 has a form factor roughly that of a cellular telephone or of a compact PDA.

The specific display module 48 and keypad module 52, as well as other components, dictate the overall configuration of the handheld electronic device 4. For instance, the exemplary keypad module 52 is arranged to have a plurality of rows of keys 92, with many of the rows each having five keys. The display module 48 includes the display 36, such as an LCD, having a particular configuration, meaning that it has qualities such as a particular size, resolution, speed, and is either color or monochrome, by way of example. The particular display module 48 was selected from among a plurality of other display modules similar to but different than the display module 48 and each being mountable to the display receptacle 64 of the frame 40 in place of the display module 48. For instance, other usable display modules might have had different specifications such as different sizes, resolutions, speeds, colorations and the like. The keypad module 52 similarly was selected from among a plurality of other keypad modules similar to but different than keypad module 52 and mountable to the keypad receptacle 68 of the frame 40 in place of the keypad module 52. For instance, other keypad modules might have different key arrangements, sizes, and the like.

The particular configurations of the display module 48, the keypad module 52, and any other components that are assembled to form the handheld electronic device 4 together contribute to an overall configuration of the handheld electronic device 4. Such components can thus be selected by the user in imparting to the handheld electronic device 4 a desired configuration.

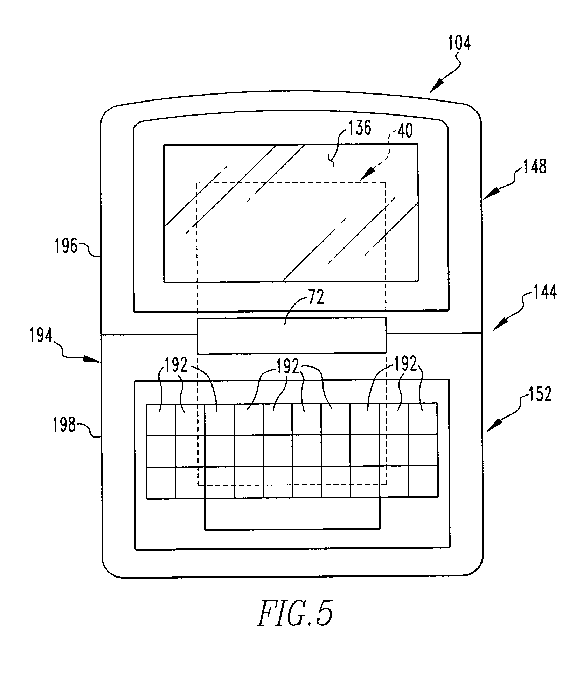

By way of further example, Figs. 4 and 5 depict a handheld electronic device 104 of a configuration different than that of the handheld electronic device 4, but still including the same frame 40. Specifically, the handheld electronic device 104 has a different interface apparatus 144 mounted to the frame 40. The interface apparatus 144 includes a different display module 148 and a different keypad module 152 that are of configurations different than those of the display module 48 and the keypad module 52. Specifically, the display module 148 has a display 136 that is relatively larger than the display 36 of the display module 48. Additionally, the keypad module 152 has a plurality of keys 192 arranged in rows and columns, with several of the rows each having ten of the keys 192.

The display module 148 includes a first housing portion 196, and the keypad module 152 includes a second housing portion 198. The first and second housing portions 196 and 198, in combination with the frame 40, together form a housing 194 of the handheld electronic device 104. The housing 194 has a different form factor than the housing 94 of the handheld electronic device 4. Specifically, the housing 194 has a form factor similar to that of a full-sized PDA. This form factor, along with the particular configurations of the display module 148, the keypad module 152, and the other components of the handheld electronic device 104, together contribute to an overall configuration of the handheld electronic device 104 that is different than the configuration of the handheld electronic device 4.

It thus can be seen that various components can be mounted to the frame 40 to provide a variety of handheld electronic devices having different configurations, such as the handheld electronic devices 4 and 104. It is noted that the interface modules of the interface apparatus 44 and the interface 144 can be assembled in different combinations and in combination with different components than those expressly depicted herein to provide even further configurations of handheld electronic devices that can be formed. It is further noted that a user might own several similar components, such as several keypad modules that can be alternately mounted to the frame 40 depending on the user's need at any particular time. This provides even further versatility. Moreover, a user can upgrade the electronic handheld device 4 without having to replace the handheld electronic device 4 in its entirety. For instance, a user may desire to purchase and use an improved display module having a higher resolution and/or a larger size, etc., in place of the display module 48 without having to additionally replace, for instance, the frame 40 or the keypad module 52. Such easy upgradeability further adds to the versatility and appeal of the disclosed and claimed concept.

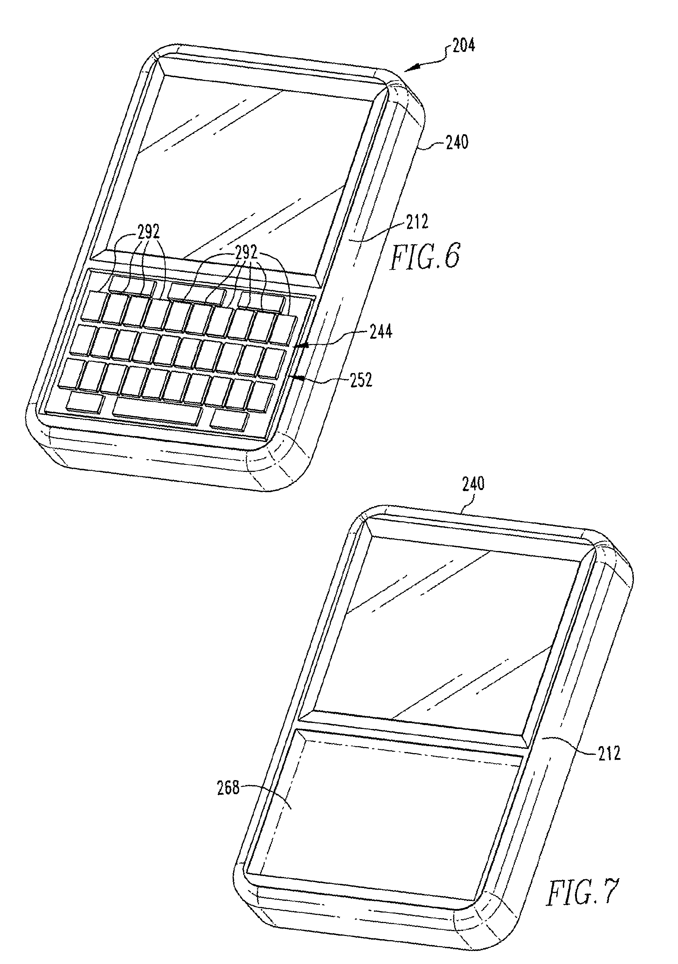

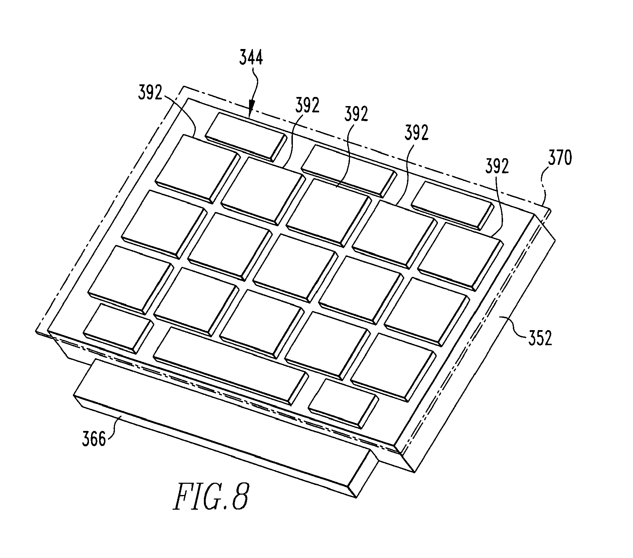

It is noted that the disclosed and claimed concept does not require that large numbers of components to be capable of replacement with respect to a given handheld electronic device. For instance, an improved handheld electronic device 204 in accordance with the disclosed and claimed concept is indicated generally in Fig. 6. The handheld electronic device 204 includes a frame 240, as is shown generally in Fig. 7, and additionally includes an interface apparatus 244 mountable to the frame 240. In the exemplary embodiment, the interface apparatus 244 consists of a keypad module 252 which serves as an interface module that can be removed and replaced with other keypad modules.

The exemplary keypad module 252 is mounted to the frame 240 and is electrically connected together with a processor apparatus 212 mounted to the frame 240. The keypad module 252 includes a plurality of keys 292 arranged in rows and columns, with a plurality of the rows each including ten of the keys 292. The keypad module 252, when mounted to the frame 240, is disposed within a keypad receptacle 268, such as is depicted generally in Fig. 7.

If it is desired that the configuration of the handheld electronic device 204 be changed, the keypad module 252 can be removed from the frame 240 and replaced with, for instance, another keypad module 352, such as is depicted generally in Fig. 8. The keypad module 352 is an interface module of a different interface apparatus 344 that is mountable to the frame 240. Specifically, the keypad module 352 includes a plurality of keys 392 arranged in rows and columns. Several of the rows each include five of the keys 392. The keypad module 352 additionally includes a membrane 370 disposed over and covering the keys 392, such as for the purpose of protecting the keys 392. The keypad module 352 includes a connector 366 having a plurality of contacts that are cooperable with other contacts on the frame 240 to enable electrical connection between the keypad module 352 and the processor apparatus 212. The keypad module 252 has a similar connector, but this is not expressly depicted herein.

It thus can be seen that the handheld electronic device 204 can have a first configuration when the keypad module 252 is installed thereon, and can have a second configuration when the keypad module 352 is disposed thereon. In one configuration, the keypad module 252 has a plurality of rows of ten keys 292 that are exposed to the surrounding atmosphere. In another configuration, the handheld electronic device 104 includes keys 392 arranged in a plurality of rows each having five of the keys 392, and additionally includes a membrane 370 covering the keys 392.

It is noted that in the exemplary embodiment of the handheld electronic device 204, the form factor of the handheld electronic device 204 remains unchanged between the keypad module 252 being mounted to the frame 240, the keypad receptacle 268 being free of a keypad module, and a keypad module 352 being mounted to the frame 240 in the keypad receptacle 268. As such, a varying form factor does not contribute to the overall variable configuration of the depicted exemplary handheld electronic device 204, but other keypad modules potentially could be of configurations that do alter the form factor of the handheld electronic device 204, without departing from the disclosed and acclaimed concept.

It can be seen that the keypad module 252 is a full keypad, such as might be configured as a full QWERTY keyboard, and is similar to the key layout of the keypad module 152. In contrast, the keypad module 352 can be and likely is configured as a reduced keypad, meaning that each of the keys 392 has a relatively greater number of characters or other linguistic elements assigned thereto than are assigned to the keys 292 of the keypad module 252. The key arrangement of the keypad module 352 bears some similarity to the arrangement of the keys 92 of the keypad module 52.

In order for a reduced keypad, such as that of the keypad module 352, to properly provide input to the processor apparatus 212, the processor apparatus 212 will need to have, for instance, a disambiguation routine 32 executable thereon. However, the disambiguation route 32 will not need to be operational when the keypad module 252 is mounted to the handheld electronic device 204. The processor apparatus 212 is thus advantageously configured to detect the particular configuration of the keypad module electrically connected therewith, i.e., the particular configuration of the keypad module 352, or other appropriate keypad module, and to responsively reconfigure an input mechanism of the processor apparatus 212, such as by selectively activating or deactivating the disambiguation routine 32.

This same reconfiguration feature is provided on the handheld electronic device 4. Each of the handheld electronic devices presented herein advantageously has the capability to reconfigure the processor apparatus thereof to properly interface with the particular selected components thereof. For instance, the processor apparatus 12 of the handheld electronic device 4 advantageously will reconfigure an output mechanism of the processor apparatus 12 if, for instance, the display module 48 is removed and replaced with a different display module having a different resolution.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

## Claims

1. A method of configuring a handheld electronic device comprising:
mounting to a support of the handheld electronic device a keypad module structured to be removable from the support and replaceable with another keypad module having another configuration;
electrically connecting together the keypad module and a processor apparatus of the handheld electronic device;
mounting to the support a display module structured to be removable from the support and replaceable with another display module having another configuration; and
electrically connecting together the display module and the processor apparatus.

2. The method of Claim 1, further comprising selecting the keypad module from among a plurality of different keypad modules each structured to be removably mounted to the support and electrically connected with the processor apparatus.

3. The method of Claim 1, further comprising selecting the display module from among a plurality of different display modules each structured to be removably mounted to the support and electrically connected with the processor apparatus.

4. The method of Claim 1, further comprising imparting to the handheld electronic device a form factor dictated at least in part by at least one of the keypad module and the display module.

5. The method of Claim 4, further comprising selecting the form factor from among a plurality of different form factors each dictated at least in part by at least one of a plurality of keypad modules and display modules from among which the keypad module and the display module have been selected.

6. The method of Claim 1, further comprising removing the display module from the support and the processor apparatus, mounting to the support another display module having another configuration, electrically connecting together the another display module and the processor apparatus.

7. The method of Claim 6, further comprising reconfiguring an output mechanism of the handheld electronic device in accordance with another configuration.

8. The method of Claim 1, further comprising removing the keypad module from the support and the processor apparatus, mounting to the support another keypad module having another configuration, electrically connecting together the another keypad module and the processor apparatus.

9. The method of Claim 8, further comprising removing as the keypad module a keypad module having a first number of keys, and mounting as the another keypad module a keypad module having a second number of keys, the first and second numbers being different.

10. The method of Claim 8, further comprising removing as the keypad module a keypad module having one of a membrane covering a set of keys and a set of keys exposed to the surrounding atmosphere, and mounting as the another keypad module a keypad module having the other of a membrane covering a set of keys and a set of keys exposed to the surrounding atmosphere.

11. The method of Claim 8, further comprising removing as the keypad module a keypad module having one of a full keypad and a reduced keypad, mounting as the another keypad module a keypad module having the other of a full keypad and a reduced keypad, and reconfiguring an input mechanism of the handheld electronic device in accordance with the configuration of the other of a full keypad and a reduced keypad.

12. A handheld electronic device comprising:
a structure;
a processor apparatus;
an interface apparatus comprising at least a first interface module, the at least first interface module comprising one of a keypad module and a display module;
the at least first interface module being electrically connected with the processor apparatus and disposed on the structure, the at least first interface module being of a first configuration and being structured to be removed from the structure and the processor apparatus and to be replaced with another interface module of a second configuration different than the first configuration.

13. The handheld electronic device of Claim 12 wherein the structure comprises a housing having a receptacle, the interface module being received in the receptacle, the housing with the interface module received in the receptacle and the housing with the receptacle being free of the interface module having substantially the same form factor.

14. The handheld electronic device of Claim 12 wherein the at least first interface module is a keypad module and comprises a first number of input members and wherein the another keypad module comprises a second number of input members, the first number and the second number being different.

15. The handheld electronic device of Claim 12 wherein the at least first interface module is a keypad module, and wherein the interface apparatus further comprises a display module, the keypad module comprising a first housing portion, the display module comprising a second housing portion, the first and second housing portions each defining at least a portion of a form factor of the handheld electronic device.

16. The handheld electronic device of Claim 15, wherein the keypad module is selected from among a plurality of different keypad modules each structured to be removably mounted to the support and electrically connected with the processor apparatus, and wherein the display module is selected from among a plurality of different display modules each structured to be removably mounted to the support and electrically connected with the processor apparatus.

## Amended claims

### Amended claims in accordance with Rule 86(2) EPC.

**1.** A method of configuring a handheld electronic device (4, 104, 204) comprising:
mounting to a support (40, 240) of the handheld electronic device a first keypad module (152, 252) comprising a full keypad (20) having a set of keys (192, 292) exposed to the surrounding atmosphere;
electrically connecting together the first keypad module and a processor apparatus (12) of the handheld electronic device;
mounting to the support a display module (48, 148) structured to be removable from the support and replaceable with another display module (48, 148) having another configuration;
electrically connecting together the display module and the processor apparatus;
replacing the first keypad module with a second keypad module (52, 352) by:
removing the first keypad module from the support and the processor apparatus,
mounting to the support the second keypad module, the second keypad module comprising a reduced keypad having a set of keys (92, 392) and membrane (370) that covers the keys, and
electrically connecting together the second keypad module and the processor apparatus;
responsive to said replacing, activating on the processor apparatus a disambiguation routine (32); and
responsive to said activating, reconfiguring an input mechanism of the processor apparatus.

**2.** The method of Claim l, further comprising selecting the keypad module from among a plurality of different keypad modules each structured to be removably mounted to the support and electrically connected with the processor apparatus.

**3.** The method of Claim 1, further comprising selecting the display module from among a plurality of different display modules each structured to be removably mounted to the support and electrically connected with the processor apparatus.

**4.** The method of Claim 1, further comprising removing the display module from the support and the processor apparatus, mounting to the support another display module having another configuration, electrically connecting together the another display module and the processor apparatus.

**5.** The method of Claim 4, further comprising reconfiguring an output mechanism of the handheld electronic device in accordance with another configuration.

**6.** The method of claim 1, further comprising removing as the keypad module a keypad module having one of a set of keys covered by a membrane and a set of keys exposed to the surrounding atmosphere, and mounting as the another keypad module a keypad module having the other of a set of keys covered by a membrane and a set of keys exposed to the surrounding atmosphere.

**7.** A handheld electronic device (4, 104, 204) comprising :
a structure (40, 240) ;
a processor apparatus (12) having a disambiguation routine (32) executable thereon;
an interface apparatus (44) comprising at least a first interface module (48, 52, 148, 152, 252, 352), the at least first interface module comprising a first keypad module (152, 252) having a full keypad (20) that comprises a set of keys (192, 292) exposed to the atmosphere;
the at least first interface module being electrically connected with the processor apparatus and disposed on the structure, the at least first interface module being structured to be removed from the structure and the processor apparatus and to be replaced with another interface module (52, 352) comprising a second keypad module (52, 352) having a reduced keypad that comprises a set of keys (92, 392) and membrane (370) that covers the keys, responsive to a replacement of the at least first interface module with the another interface module the processor apparatus being structured to execute the disambiguation routine to reconfigure an input mechanism of the processor apparatus.

**8.** The handheld electronic device of Claim 7 wherein the structure (40, 240) comprises a housing (94, 194) having a receptacle (268), the interface module being received in the receptacle.

**9.** The handheld electronic device of Claim 7 wherein the interface apparatus further comprises a display module (48, 148), the first keypad module comprising a first housing portion (96, 196), the display module comprising a second housing portion (98, 198), the first and second housing portions each defining at least a portion of a form factor of the handheld electronic device.

**10.** The handheld electronic device of Claim 9, wherein the first keypad module is selected from among a plurality of different keypad modules each structured to be removably mounted to the support and electrically connected with the processor apparatus, and wherein the display module is selected from among a plurality of different display modules each structured to be removably mounted to the support and electrically connected with the processor apparatus.
